# EUROPEAN PATENT SPECIFICATION

(11) **EP 2 077 176 B1**
(45) Date of publication and mention of the grant of the patent: **18.08.2010**
(21) Application number: 08250057.0
(22) Date of filing: 07.01.2008
(51) Int. Cl.: B24B 45/00, B27B 5/32

(54) **Locking device with quick release mechanism**
Feststellvorrichtung mit schnellem Freigabemechanismus
Dispositif de verrouillage avec mécanisme de libération rapide

(43) Date of publication of application: 08.07.2009
(73) Proprietor: Power Network Industry Co. Ltd., Industry 1st Road Ping-Jen Park Ping-Jen City Taoyuan County 324 (TW)
(72) Inventor: Chen, Ting-Kuang, Keelung City (TW)
(74) Representative: Gee, Steven William

(56) References cited:
- EP-A- 0 480 163
- US-A- 5 175 963
- US-A1- 2003 223 843

## Description

### BACKGROUND OF THE INVENTION

### 1. Field of the Invention

The present invention relates generally to a locking device for outputting high torque and can be easily operated and released.

### 2. The Prior Arts

Most conventional machines, especially those including rotational parts such as grinding wheels, use bolts or nuts to lock the rotational parts. The bolts or nuts have to be tightened or loosened by tools such as wrenches or screwdrivers. The operation of the wrenches or screwdrivers take a lot of time and effort, and the users have to carry different types and sizes of tools. This is inconvenient for the users.
US Patent 5,175,963 discloses a locking device for locking a rotational part, the device comprising an outer ring having an interior enclosed by a wall thereof; a clamping disc received in the interior of the outer ring and located at a first side of the outer ring; an insert part received in the interior of the outer ring and located on the clamping disc, the insert part including a plurality of first stops; a plurality of second stops provided on the outer ring; a plurality of balls received in the interior of the outer ring and located between adjacent first and second stops; a plurality of springs received in the interior of the outer ring and each being biased between remote first and second stops, and a clamping nut received in the interior of the outer ring and located at a second side of the outer ring, a tubular portion extending from a center of the clamping nut, through the insert part and through the clamping disc, the tubular portion having a screw hole therethrough for connection with a screw bolt, the balls being located in a space between the clamping disc, the clamping nut, an inner periphery of the outer ring and the insert part, the outer ring including a plurality of recesses into which the balls can fall.

### SUMMARY OF THE INVENTION

A primary objective of the present invention is to provide a locking device which is easily operated without using tools and can quickly lock or unlock a rotational part.

The present invention is designed based on a planet gear system which includes an outer ring, balls and a locking disc. The outer ring performs as the ring gears on the outside of the planet gear system, the balls perform as the planet gears and the locking disc performs as the sun gear. When the outer ring is rotated in the first direction, the balls are moved with the outer ring and bring the locking disc to rotate in the same direction so as to lock the rotational part. When the outer ring is rotated in the second direction, the locking disc can be quickly released.

According to the present invention, there is provided a locking device for locking a rotational part, the device comprising an outer ring having an interior enclosed by a wall thereof; a clutch disc received in the interior of the outer ring and located at a first side of the outer ring; a first pad received in the interior of the outer ring and located on the clutch disc, the first pad including a plurality of first protrusions; a second pad received in the interior of the outer ring and located on the first pad, the second pad including a plurality of second protrusions; a plurality of balls received in the interior of the outer ring and located between adjacent first and second protrusions; a plurality of springs received in the interior of the outer ring and each being biased between remote first and second protrusions, and a locking disc received in the interior of the outer ring and located at a second side of the outer ring, a tubular portion extending from a center of the locking disc and through the second pad, through the first pad and through the clutch disc, the tubular portion being securely connected to the second pad, the tubular portion having a screw hole therethrough for connection with a screw bolt, the balls being located in a space between the clutch disc, the locking disc, an inner periphery of the outer ring, the first pad and the second pad, the locking disc including a plurality of recesses into which the balls can fall.

The locking disc of the present invention includes a screw hole to be connected with a screw bolt of a machine.

There are two O-rings located between the inner periphery of the outer ring and the locking disc and between the inner periphery of the outer ring and the clutch disc to properly position the two discs in the outer ring.

### BRIEF DESCRIPTION OF THE DRAWINGS

The present invention will be apparent to those skilled in the art by reading the following detailed description of a preferred embodiment thereof, with reference to the attached drawings, in which:

Figure 1 is a perspective view showing a locking device in accordance with the present invention;

Figure 2 is a cross-sectional view of the locking device in accordance with the present invention;

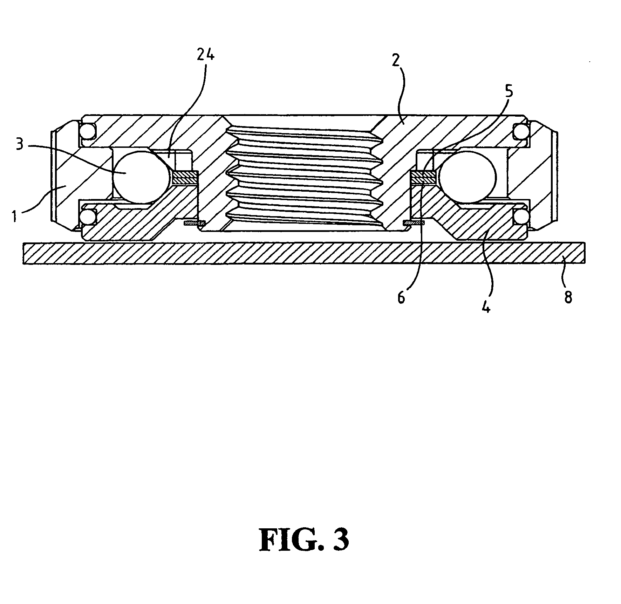

Figure 3 is a cross-sectional view showing the balls having fallen into the recesses of a locking disc;

Figure 4 shows an outer ring of the locking device rotated in the first direction to lock a grinding wheel;

Figure 5 shows the outer ring of the locking device is rotated in the second direction to unlock the grinding wheel; and

Figure 6 shows that the springs push the outer ring back to its original position after the outer ring is released.

### DETAILED DESCRIPTION OF THE PREFERRED EMBODIMENT

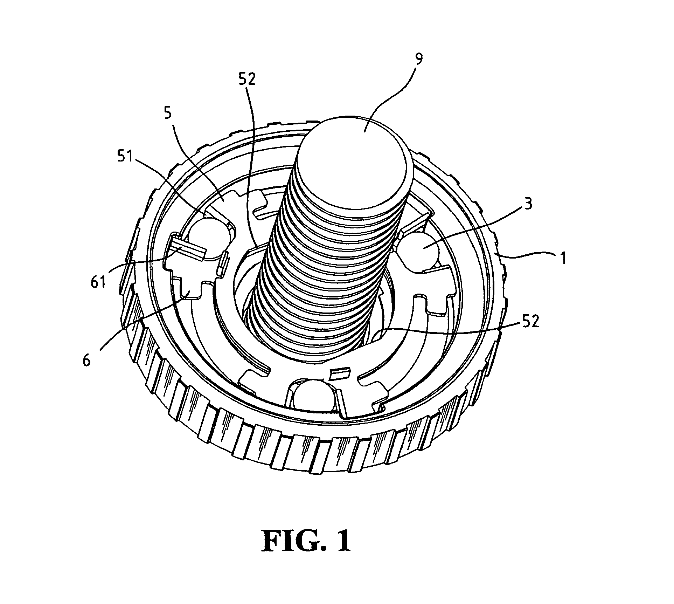

With reference to the drawings and in particular to Figures 1, 2 and 4, a locking device comprises an outer ring 1, a clutch disc 4, a locking disc 2, a plurality of balls 3, a first pad 6, a second pad 5 and a plurality of springs 7. The outer ring 1 includes an interior enclosed by a wall thereof, and a plurality of ribs are formed on the outside of the wall for convenience of operation by users' fingers. The inside of the wall includes two receiving space respectively for the clutch disc 4 and the locking disc 2.

The clutch disc 4 is a circular disc and is received in the interior of the outer ring. The clutch disc 4 is located at a first side of the outer ring 1 and includes a central hole. An underside of the clutch disc 4 is removably connected to a grinding wheel 8. A first O-ring 41 is located between the inner periphery of the outer ring 1 and the clutch disc 4 so as to provide a damping action to the outer ring 1 and the clutch disc 4 and further position the clutch disc 4 relative to the inner periphery of the outer ring 1.

The first pad 6 is received in the interior of the outer ring and is located on the clutch disc 4. The first pad 6 includes a plurality of first protrusions 61 extending upward from a periphery thereof at equal intervals. A central hole is defined through a center of the first pad 6.

The second pad 5 is received in the interior of the outer ring and is located on the first pad 6. The second pad 5 includes a plurality of second protrusions 51 extending downward from a periphery thereof at equal intervals. A central hole is defined through a center of the second pad 5, and two first flat surfaces 52 are defined in the inner periphery of the central hole.

The balls 3 are received in the interior of the outer ring and located between adjacent first and second protrusions 61, 51 respectively.

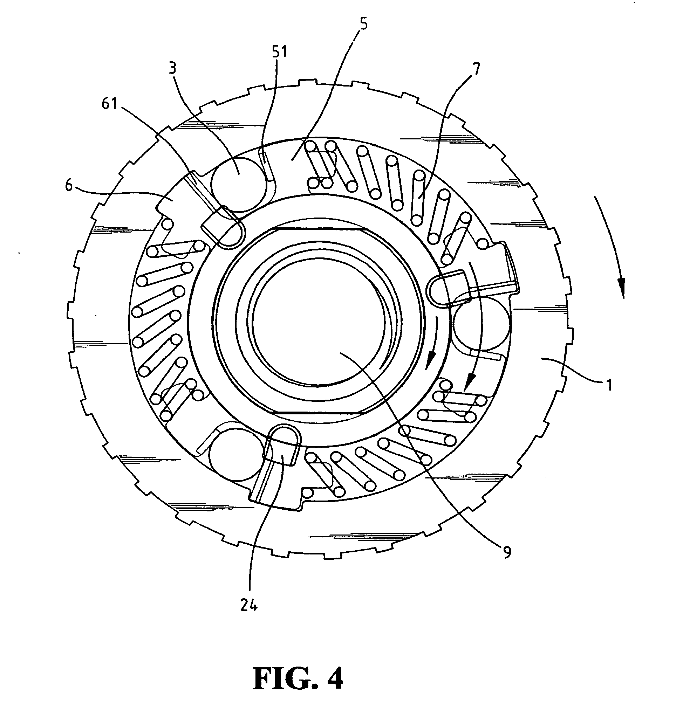

The springs 7 are received in the interior of the outer ring and located between remote first and second protrusions 61, 51. The two ends of each spring 7 bias the first and second protrusions 61, 51 respectively as shown in Figure 4.

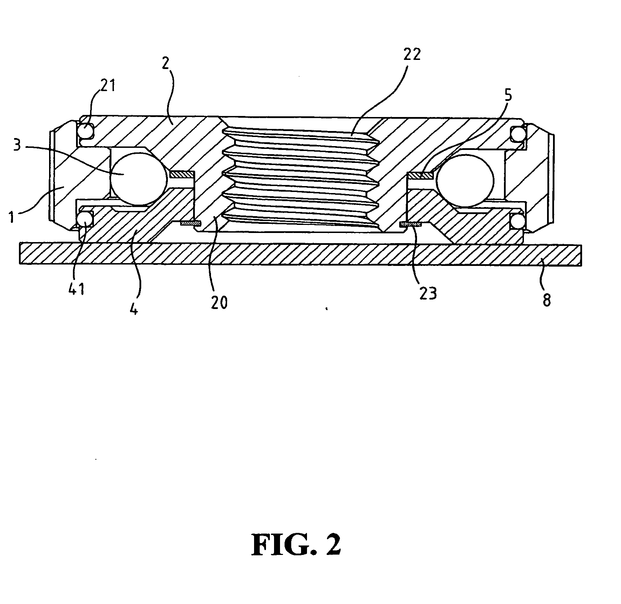

The locking disc 2 is received in the interior and located at a second side of the outer ring 1. A tubular portion 20 extends from a center of the locking disc 2 and through the central hole of the second pad 5, through the central hole of the first pad 6 and through the central hole of the clutch disc 4. A clip ring 23 as shown in Figure 2 is then clipped on the tubular portion 20. The tubular portion 20 includes two second flat surfaces (not shown) which are matched with the first flat surfaces 52 so that the second pad 5 is securely connected with the tubular portion 20, and the second pad 5 does not rotate relative to the tubular portion 20.
The balls 3 are located in a space between the clutch disc 4, the locking disc 2, the inner periphery of the outer ring 1, the first pad 6 and the second pad 5.
The locking disc 2 includes a plurality of recesses 24 into which the balls 3 can fall.
The tubular portion 20 of the locking disc 2 includes a screw hole 22 defined therethrough so as to be connected with a screw bolt 9 of a machine.
A second O-ring 21 is located between the inner periphery of the outer ring 1 and the locking disc 2 so as to provide a damping action to the outer ring 1 and the locking disc 2 and further position the locking disc 2 relative to the inner periphery of the outer ring 1.

The arrangement of the parts mentioned above forms a planet gear system wherein the outer ring 1 performs as the ring gear on the outside of the planet gear system, the balls 3 perform as the planet gears and the locking disc 2 performs as the sun gear.

As shown in Figure 4, when the outer ring 1 is rotated in the first direction (clockwise), the balls 3 are moved with the outer ring 1 due to friction and push the second protrusions 51 to rotate the second pad 5. Because the second pad 5 is non-rotatably connected to the locking disc 2, the locking disc 2 is rotated with the second pad 5 as well. The balls 3 do not fall into the recesses 24 in the locking disc 2 so that the clutch disc 4 is supported by the balls 3 and pushed toward the grinding wheel 8 which is locked in the first direction.

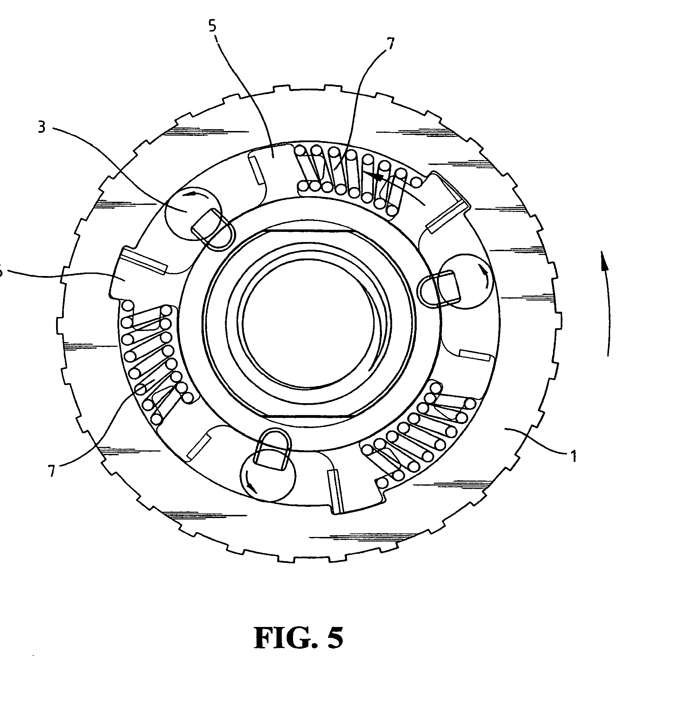

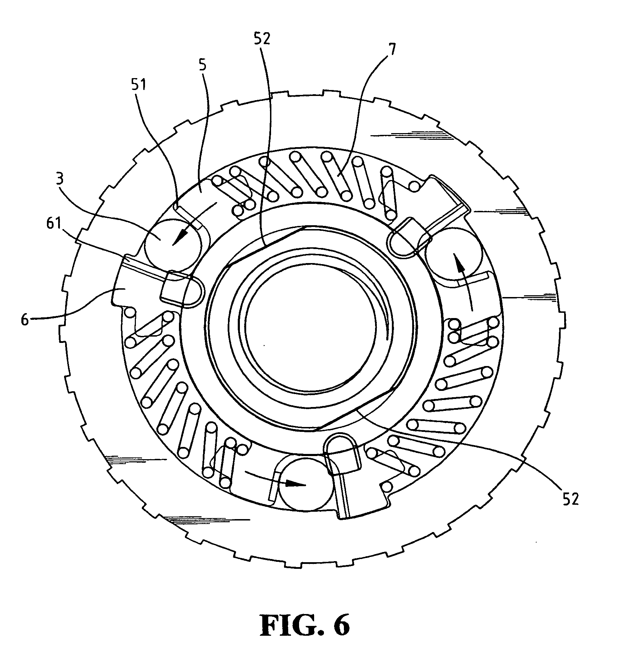

As shown in Figure 5, when the outer ring 1 is rotated in the second direction (counter clockwise), the balls 3 are moved with the outer ring 1 due to friction and push the first protrusions 61 to rotate the first pad 6 in the second direction such that the springs 7 are compressed. When the balls 3 move adjacent to the recesses 24, they fall into the recesses 24 in the locking disc 2 so that the clutch disc 4 is not supported by the balls 3 and a gap is defined between the clutch disc 4 and the grinding wheel 8 such that the grinding wheel 8 can be then loosened easily.
As shown in a comparison of Figure 5 with Figure 6, when the outer ring 1 is released the springs 7 release their spring force to move the second pad 5 and the first pad 6 back to their original relative positions in which the protrusions 61 and 51 engage the respective balls 3. During this movement the second pad 5 moves in the second direction (i.e. anti-clockwise as drawn) and the first pad 6 moves in the first direction (i.e. clockwise as drawn). The locking disc 2 is co-rotated with the second pad 5 to be loosened. This allows the user to easily and quickly lock and unlock the grinding wheel 8.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A locking device for locking a rotational part, the device comprising
an outer ring (1) having an interior enclosed by a wall thereof;
a clutch disc (4) received in the interior of the outer ring and located at a first side of the outer ring;
a first pad (6) received in the interior of the outer ring and located on the clutch disc, the first pad including a plurality of first protrusions (61);
a second pad (5) received in the interior of the outer ring and located on the first pad, the second pad including a plurality of second protrusions (51);
a plurality of balls (3) received in the interior of the outer ring and located between adjacent first and second protrusions (61, 51);
a plurality of springs (7) received in the interior of the outer ring and each being biased between remote first and second protrusions (61,51), and
a locking disc (2) received in the interior of the outer ring and located at a second side of the outer ring, a tubular portion (20) extending from a center of the locking disc and through the second pad (5), through the first pad (6) and through the clutch disc (4), the tubular portion being securely connected to the second pad, the tubular portion having a screw hole (22) therethrough for connection with a screw bolt, the balls (3) being located in a space between the clutch disc, the locking disc, an inner periphery of the outer ring, the first pad and the second pad, the locking disc including a plurality of recesses (24) into which the balls can fall.

2. The locking device as claimed in Claim 1, wherein the second pad (5) includes a central hole, and two first flat surfaces (52) are defined in an inner periphery of the central hole, the tubular portion of the locking disc includes two second flat surfaces which are matched with the first flat surfaces.

3. The locking device as claimed in Claim 1, wherein a first O-ring (41) is located between the inner periphery of the outer ring (1) and the clutch disc (4).

4. The locking device as claimed in Claim 1, wherein a second O-ring (21) is located between the inner periphery of the outer ring (1) and the locking disc (2).

## Patentansprüche

1. Sperrvorrichtung zum Sperren eines Rotationsteils, wobei die Vorrichtung Folgendes umfasst:
einen äußeren Ring (1), der einen Innenraum aufweist, der von einer Wand desselben umgeben ist;
eine Kupplungsscheibe (4), die in dem Innenraum des äußeren Rings aufgenommen wird und an einer ersten Seite des äußeren Rings angeordnet ist;
einen ersten Belag (6), der in dem Innenraum des äußeren Rings aufgenommen wird und auf der Kupplungsscheibe angeordnet ist, wobei der erste Belag eine Vielzahl von ersten Vorsprüngen (61) umfasst;
einen zweiten Belag (5), der in dem Innenraum des äußeren Rings aufgenommen wird und auf dem ersten Belag angeordnet ist, wobei der zweite Belag eine Vielzahl von zweiten Vorsprüngen (51) umfasst;
eine Vielzahl von Kugeln (3), die in dem Innenraum des äußeren Rings aufgenommen werden und zwischen benachbarten ersten und zweiten Vorsprüngen (61, 51) angeordnet sind;
eine Vielzahl von Federn (7), die in dem Innenraum des äußeren Rings aufgenommen werden und jeweils zwischen entfernten ersten und zweiten Vorsprüngen (61, 51) vorgespannt sind, und
eine Sperrscheibe (2), die in dem Innenraum des äußeren Rings aufgenommen wird und an einer zweiten Seite des äußeren Rings angeordnet ist, wobei sich ein röhrenförmiger Abschnitt (20) von einer Mitte der Sperrscheibe und durch den zweiten Belag (5), durch den ersten Belag (6) und durch die Kupplungsscheibe (4) erstreckt, wobei der röhrenförmige Abschnitt mit dem zweiten Belag fest verbunden ist, der röhrenförmige Abschnitt eine Gewindebohrung (22) dort hindurch für die Verbindung mit einer Schraube aufweist, die Kugeln (3) in einem Raum zwischen der Kupplungsscheibe, der Sperrscheibe, einer inneren Umgebung des äußeren Rings, dem ersten Belag und dem zweiten Belag angeordnet sind und die Sperrscheibe eine Vielzahl von Vertiefungen (24) umfasst, in die die Kugeln fallen können.

2. Sperrvorrichtung nach Anspruch 1, wobei der zweite Belag (5) ein mittiges Loch umfasst, zwei erste flache Oberflächen (52) in einem inneren Umfang des mittigen Lochs definiert sind und der röhrenförmige Abschnitt der Sperrscheibe zwei zweite flache Oberflächen umfasst, die zu den ersten flachen Oberflächen passen.

3. Sperrvorrichtung nach Anspruch 1, wobei ein erster O-Ring (41) zwischen dem inneren Umfang des äußeren Rings (1) und der Kupplungsscheibe (4) angeordnet ist.

4. Sperrvorrichtung nach Anspruch 1, wobei ein zweiter O-Ring (21) zwischen dem inneren Umfang des äußeren Rings (1) und der Sperrscheibe (2) angeordnet ist.

## Revendications

1. Un dispositif de verrouillage destiné à verrouiller un élément rotatif, le dispositif comprenant
une bague extérieure (1) possédant une partie intérieure fermée par une paroi de celle-ci, un disque d'embrayage (4) reçu dans la partie intérieure de la bague extérieure et placé sur un premier côté de la bague extérieure,
un premier patin (6) reçu dans la partie intérieure de la bague extérieure et placé sur le disque d'embrayage, le premier patin comprenant une pluralité de premières protubérances (61),
un deuxième patin (5) reçu dans la partie intérieure de la bague extérieure et placé sur le premier patin, le deuxième patin comprenant une pluralité de deuxièmes protubérances (51),
une pluralité de billes (3) reçues dans la partie intérieure de la bague extérieure et placées entre des premières et deuxièmes protubérances adjacentes (61, 51),
une pluralité de ressorts (7) reçus dans la partie intérieure de la bague extérieure et chacun d'eux étant positionné entre des premières et deuxièmes protubérances distantes (61, 51), et un disque de verrouillage (2) reçu dans la partie intérieure de la bague extérieure et placé sur un deuxième côté de la bague extérieure, une partie tubulaire (20) s'étendant d'un centre du disque de verrouillage et au travers du deuxième patin (5), au travers du premier patin (6) et au travers du disque d'embrayage (4), la partie tubulaire étant raccordée solidement au deuxième patin, la partie tubulaire possédant un trou de vis (22) au travers de celle-ci pour raccordement à un boulon fileté, les billes (3) étant placées dans un espace entre le disque d'embrayage, le disque de verrouillage, une périphérie intérieure de la bague extérieure, le premier patin et le deuxième patin, le disque de verrouillage comprenant une pluralité d'évidements (24) dans lesquels les billes peuvent entrer.

2. Le dispositif de verrouillage selon la Revendication 1, où le deuxième patin (5) comprend un trou central, et deux premières surfaces planes (52) sont définies dans une périphérie intérieure du trou central, la partie tubulaire du disque de verrouillage comprend deux deuxièmes surfaces planes qui sont appariées aux premières surfaces planes.

3. Le dispositif de verrouillage selon la Revendication 1, où un premier joint torique (41) est placé entre la périphérie intérieure de la bague extérieure (1) et le disque d'embrayage (4).

4. Le dispositif de verrouillage selon la Revendication 1, où un deuxième joint torique (21) est placé entre la périphérie intérieure de la bague extérieure (1) et le disque de verrouillage (2).
